# EUROPEAN PATENT APPLICATION

(11) **EP 1 607 378 A1**
(43) Date of publication of application: **21.12.2005**
(21) Application number: 04014332.3
(22) Date of filing: 18.06.2004
(51) Int. Cl.: C04B 28/02, C04B 14/06, C04B 20/10

(54) **Cement composition comprising fumed metal oxide powder**

(71) Applicant: Degussa AG, 40474 Düsseldorf (DE)
(72) Inventor: Schneider, Gerrit Dr., 63456 Hanau (DE); Schiener, Thomas, 63755 Alzenau (DE); Deller, Klaus Dr., 63512 Hainburg (DE); Trettin, Reinhard, Prof. Dr., 57250 Netphen (DE); Korpa, Arjan, Dipl.-Chem., 57074 Siegen (DE)

(57) **Abstract**

Admixture for cement systems comprising a sorbent and a fumed metal oxide powder.

Cement composition comprising the admixture, cement and water.

## Description

The invention relates to an admixture for cement systems comprising a fumed metal oxide powder and a cement composition comprising the admixture.

Silica fume (SF) is long known as an essential constituent of high and ultra-high performance concrete (HPC and UHPC) in combination with superplasticizer (Khayat K.H. and Aitcin P.C., Silica fume in concrete: an overview, Fourth CANMET/ACI International Conference on Fly ash, Silica fume, slag and natural pozzolans in concrete, SP-132, V.2 (1992), 835. Guide for use of silica fume, 234R-96 ACI Publications (1996)).

SF shows superior properties as filler. It enhances the rheological characteristics by lubrication and produces secondary hydrates by pozzolanic reaction with the lime and C-S-H phases resulting from primary hydration (Pierre Richard, Marcel Cheyrezy, Composition of reactive powder concrete, Cement and Concrete Research, vol. 25, No. 7, pp. 1501-1511, 1995).

SF is an industrial by product from ferro-silicium alloys producing units, and hence its availability is limited. It also may gives an undesirable dark colour to the concrete. Another drawback is a fluctuating homogeneity of the SF, which may negatively affect the quality of the concrete (Chandra, S, Bergqvist, H, Interaction of silica colloid with Portland cement, Proc. Int. Congr. Chem. Cem. Vol. 3 (1997), 3ii106, 6pp.). Yet another drawback is the amount of SF to be incorporated in concrete systems to achieve the properties of HPC and UHPC systems.

It is the object of this invention to provide an admixture for cement systems comprising a substance, which does not show the drawback seen when using silica fume.

In particular the amount of the substitute should be reduced, while still producing a high quality concrete. In addition the quality of the substitute should not fluctuate in order to obtain reproducible concrete qualities.

Said object is achieved by an admixture for cement systems comprising a sorbent and a fumed metal oxide powder.

Fumed according to the invention is understood to mean the formation of a metal oxide by flame hydrolysis or flame oxidation of a metal compound or metal compounds in the gas phase in a flame produced by the reaction of a combustion gas and an oxygen-containing gas, preferably air. Usually chlorides are used as metal compounds.

During the flame process highly-disperse primary particles are formed first, which grow together as the reaction progresses to form aggregates, which can further combine to form agglomerates. The surface of the fumed metal oxides usually shows hydroxyl groups, which may react further.

Preferred fumed metal oxide powders are silica, alumina, titania, ceria, zirkonia or physical mixtures or chemical mixtures thereof.

Chemical mixtures are understood to mean those in which the precursors of the mixed oxide are hydrolysed or oxidised together in the flame. Physical mixtures are understood to mean those in which fumed oxide powders are mixed. Typical mixed oxide powders are silicon-aluminium mixed oxides or silicon-titanium mixed oxides.

The fumed metal oxide powder in the admixture according to the invention can be surface treated. In this way the reactivity of the fumed metal oxide can be adjusted. Suitable surface treatment regents can be for example organo silanes, silazanes, and (cyclic) polysiloxanes.

The specific surface area of the fumed metal oxide is preferably at least 30 m²/g. Usually fumed metal oxide powders having a specific surface area between 30 and 200 m²/g. Powders having more than 200 m²/g specific surface area usually are difficult to handle, while the use of fumed metal oxide powders having specific surface areas below 30 m²/g will result in concrete systems of minor quality.

In a preferred embodiment the fumed metal oxide powder is uniformly dispersed in a liquid phase. Water is preferred as liquid phase, while a mixture of water and an organic solvent is also possible, even though it is not preferred.

It is preferred that the average particle diameter d₅₀ of the fumed metal oxide powder in the dispersion is below 1 µm, in particular below 300 nm.

The dispersion may further contain stabilizing additives, such as acids, bases, salts, cationic polymers and/or emulsifiers.

The kind of sorbent, which is another essential part of the admixture according to the invention, is not limited. Preferred sorbents can be fly ash, rice husk ash, zeolite, silica fume, quartz, lime, slag, bentonite, activated kaolin, montmorillonite and/or diatomaceous earth.

In a preferred embodiment the admixture according to the invention additionally contains a water reducer selected from the group of sulphonated melamines, naphthalene formaldehyde and/or polyacrylate based admixtures.

Another object of the invention is a cement composition, comprising the admixture cement and water.

In a preferred embodiment the amount of fumed metal oxide powder in the cement composition, based on the amount of cement, is less than 15 wt.-%, in particular between 4 and 10 wt.-%.

It is also preferred that the water/cement ratio is from 0,2 to 0,3.

### Examples:

Silica fume: Two silica fume are used: SF1- Elkem microsilica G 983 (BET 17 m²/g) and SF2-Elkem microsilica 971-U (BET 19 m²/g). The amount of silica fume is 25 wt.-% based on cement. The formulations were adapted from: Khayat K.H. and Aitcin P.C., Silica fume in concrete: an overview, Fourth CANMET/ACI International Conference on Fly ash, Silica fume, slag and natural pozzolans in concrete, SP-132, V.2 (1992), 835. Guide for use of silica fume, 234R-96 ACI Publications (1996).

Fumed silica is used in form of aqueous dispersions.

AERODISP® W1226, 26 wt.-% fumed silica Aerosil® OX50,
AERODISP® W7520, 20 wt.-% fumed silica Aerosil 200 and
AERODISP® W1714, 14 wt.-% fumed silica-alumina mixed oxide Aerosil® MOX 170.

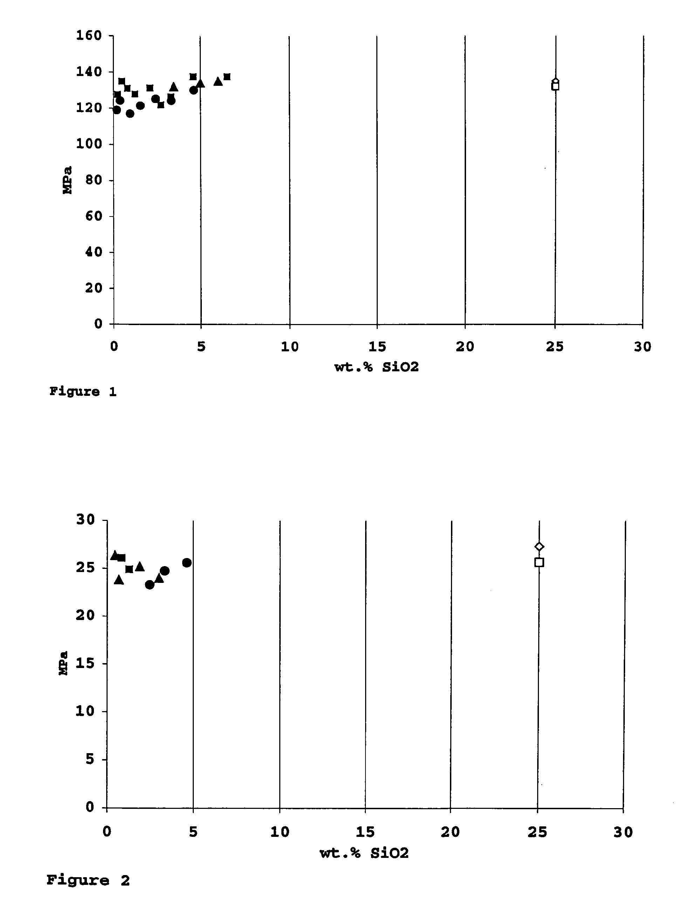

They are diluted to about 1 wt.-%. The formulations are prepared in the same way as for silica fume, but using the concentrations shown in **Figure 1** and **Figure 2.**

The cement used is PCI 52.5 R (Blaine fineness around 4900 - 5000 cm2/g). Further quartz sand (125-500 µm) and Superplasticizer (SP) (polycarboxylate type) is used. The water-cement (w/c) ratio is kept at 0,2 to 0,3 and the content of SP = 1.5 % wt, (dry content) versus cement.

After mixing and molding into prism-shaped specimens (1.5 x 1.5 x 6 cm) the forms are vibrated using a vibration table.

Figure 1 shows the compressive strength and Figure 2 shows the flexural strength in MPa vs. the amount of fumed silica respectively can be reduced silica fume in wt.-% after 28 days, with: AERODISP® W1226 (■), AERODISP® W7520 (•), AERODISP® W1714 (▲), SF1 (□) and SF2 (◇).

It can be seen that when using fumed silica instead of silica fume the amount necessary the amount of silica can clearly be reduced.

In further experiments fly ash (FA SWF), cristobalite powder (SF6000) and silica fume SF1 and SF2 are used in combination with W1226 dispersion. Even with low amount of fumed silica high values for compressive strength and flexural strength can be obtained.

## Claims

1. Admixture for cement systems comprising a sorbent and a fumed metal oxide powder.

2. Admixture for cement systems according to claim 1, **characterised in that** the fumed metal oxide powder is silica, alumina, titania, ceria, zirkonia or physical mixtures or chemical mixtures thereof.

3. Admixture for cement systems according to claim 2, **characterised in that** the surface of the fumed metal oxide powder is surface treated.

4. Admixture for cement systems according to claims 2 or 3, **characterised in that** the specific surface area of the fumed metal oxide powder is at least 30 m²/g.

5. Admixture for cement systems according to claim 1 to 4, **characterised in that** the fumed metal oxide powder is uniformly dispersed in a liquid phase.

6. Admixture for cement systems according to claim 5, **characterised in that** the average particle diameter d₅₀ of the fumed metal oxide powder in the dispersion is below 1µm.

7. Admixture for cement systems according to claim 6, charcterized in that dispersion contains stabilizing additives.

8. Admixture for cement systems according to claims 1 to 7, charcterized in that the sorbent is fly ash, rice husk ash, zeolite, silica fume, quartz, lime, slag, bentonite, activated kaolin, montmorillonite and/or diatomaceous earth.

9. Admixture for cement systems according to claims 1 to 8, charcterized in that it additionally contains a water reducer selected from the group of sulphonated melamines, naphthalene formaldehyde and/or polyacrylate based admixtures.

10. Cement composition comprising the admixture for cement systems according to the claims 1 to 9, cement and water.

11. Cement composition according to claim 10, **characterised in that** the amount of fumed metal oxide powder, based on the amount of cement, is less than 15 wt.-%.

12. Cement composition according to claims 10 or 11, **characterised in that** the water/cement ratio is 0,2 to 0,3.
